# EUROPEAN PATENT APPLICATION

(11) **EP 4 358 638 A1**
(43) Date of publication of application: **24.04.2024**
(21) Application number: 21950409.9
(22) Date of filing: 19.07.2021
(51) Int. Cl.: H04W 76/14, H04W 48/06

(54) **RELAY METHOD FOR SLIDELINK, FIRST ELECTRONIC DEVICE, CHIP, AND STORAGE MEDIUM**

(71) Applicant: GUANGDONG OPPO MOBILE TELECOMMUNICATIONS CORP., LTD., Dongguan, Guangdong 523860 (CN)
(72) Inventor: LENG, Bingxue, Dongguan, Guangdong 523860 (CN); LU, Qianxi, Dongguan, Guangdong 523860 (CN); GUO, Yali, Dongguan, Guangdong 523860 (CN)
(74) Representative: Ipside
(86) International application number: PCT/CN2021/107172
(87) International publication number: WO 2023/000143

(57) **Abstract**

The present application relates to a relay method for a sidelink, a first electronic device, a chip, a computer-readable storage medium, a computer program product, and a computer program. The method comprises: a first device performs a first operation in a relay establishment process of a sidelink according to information related to the number of relays, wherein the first electronic device is an electronic device in the sidelink. The use of embodiments of the present application can facilitate the establishment of a sidelink comprising multiple relay devices and the expansion of the communication range of the sidelink.

## Description

### TECHNICAL FIELD

The present disclosure relates to the field of communication, and in particular, to a sidelink relaying method, a first electronic device, a chip, a computer-readable storage medium, a computer program product, and a computer program.

### BACKGROUND

Sidelink (SL) is a direct communication link between devices. Unlike traditional cellular systems where communication data is received or transmitted through base stations, the devices communicate directly through the SL, resulting in higher spectral efficiency and lower transmission delay.

In the SL, a source device may be connected to a target device through a relay device, the relay device transfers data between the source device and the target device. All SL relaying schemes are currently schemes with a single hop, which results in limited communication range.

### SUMMARY

In view of this, some embodiments of the present disclosure provide a sidelink relaying method, a first electronic device, a chip, a computer-readable storage medium, a computer program product, and a computer program.

Some embodiments of the present disclosure provide a sidelink relaying method, including: performing, by a first electronic device, a first operation in a relay establishment process for the sidelink based on relay quantity-related information. The first electronic device is an electronic device in the sidelink.

Some embodiments of the present disclosure also provide a first electronic device, including a relay establishment module configured to perform a first operation in a relay establishment process for a sidelink based on relay quantity-related information. The first electronic device is an electronic device in the sidelink.

Some embodiments of the present disclosure also provide a first electronic device, including a processor and a memory. The memory is configured to store a computer program, and the processor is configured to call and run the computer program stored in the memory to execute the sidelink relaying method provided in any embodiment of the present disclosure.

Some embodiments of the present disclosure also provide a chip, including a processor configured to call and run a computer program from the memory for causing a device with the chip to execute the sidelink relaying method provided in any embodiment of the present disclosure.

The embodiment of the present disclosure also provides a computer-readable storage medium configured to store a computer program. The computer program is capable of causing a computer to execute the sidelink relaying method provided in any embodiment of the present disclosure.

Some embodiments of the present disclosure also provide a computer program product, including computer program instructions. The computer program instructions are capable of causing a computer to execute the sidelink relaying method provided in any embodiment of the present disclosure.

Some embodiments of the present disclosure also provide a computer program, capable of causing a computer to execute the sidelink relaying method provided in any embodiment of the present disclosure.

According to the technical solutions of the embodiments of the present disclosure, the first electronic device in the sidelink participates in the relay establishment process for the sidelink and performs relevant operations based on the number of relays, which is conducive to establishing a sidelink including a plurality of relay devices and expanding the communication range of the sidelink.

### BRIEF DESCRIPTION OF THE DRAWINGS

FIG. 1 is a schematic view of a communication system architecture according to some embodiments of the present disclosure.
FIG. 2A is a schematic view of a transmission mode of a sidelink according to some embodiments of the present disclosure.
FIG. 2B is a schematic view of another transmission mode of a sidelink according to some embodiments of the present disclosure.
FIG. 3 is a schematic view of a relay function according to some embodiments of the present disclosure.
FIG. 4 is a schematic view of establishing a connection of a terminal to a terminal according to some embodiments of the present disclosure.
FIG. 5 is a schematic flowchart of a sidelink relaying method according to some embodiments of the present disclosure.
FIG. 6 is a schematic flowchart of a sidelink relaying method according to another some embodiments of the present disclosure.
FIG. 7 is a schematic flowchart of a sidelink relaying method according to yet another some embodiments of the present disclosure.
FIG. 8 is a schematic structural block diagram of a first electronic device according to some embodiments of the present disclosure.
FIG. 9 is a schematic structural block diagram of a first electronic device according to another some embodiments of the present disclosure.
FIG. 10 is a schematic structural block diagram of a first electronic device according to yet another some embodiments of the present disclosure.
FIG. 11 is a schematic block diagram of a communication device according to some embodiments of the present disclosure.
FIG. 12 is a schematic block diagram of a chip according to some embodiments of the present disclosure.
FIG. 13 is a schematic block diagram of a communication system according to some embodiments of the present disclosure.

### DETAILED DESCRIPTION OF THE PREFERRED EMBODIMENTS

The following will give a description of accompanying drawings configured for describing the technical solution of the embodiments of the present disclosure.

The technical solution of the embodiments of the present disclosure may be applied to various communication systems, such as global system of mobile communication (GSM) system, code division multiple access (CDMA) system, broadband code division multiple access (WCDMA) system, general packet radio service (GPRS), long term evolution (LTE) system, advanced LET (LTE-A) system, new radio (NR) system, NR system evolution system, LTE-based access to unlicensed spectrum (LTE-U) system, NR-based access to unlicensed spectrum (NR-U) system, non-terrestrial networks (NTN) system, universal mobile telecommunications system (UMTS), wireless local area networks (WLAN), wireless fidelity (WiFi), 5th-generation (5G) system, or other communication systems.

Generally speaking, the number of connections supported by traditional communication systems is limited and easy to realize. However, with the development of communication technologies, mobile communication systems will not only support traditional communication, but also support, for example, device-to-device (D2D) communication, machine-to-machine (M2M) communication, machine type communication (MTC), and vehicle to vehicle (V2V) communication, vehicle to everything (V2X) communication, or the like. Embodiments of the present disclosure can also be applied to these communication systems.

Alternatively, the communication system in the embodiments of the present disclosure may be applied to carrier aggregation (CA) scene, dual connectivity (DC) scene, and standalone (SA) deployment scene.

The embodiments of the present disclosure describe each embodiment based on the steps performed by the electronic device. The electronic device may include a terminal device. The terminal device can also be referred to as a user equipment (UE), an access terminal, a user unit, a user station, a mobile station, a mobile apparatus, a remote station, a remote terminal, a mobile device, a user terminal, a terminal, a wireless communication device, a user agent, a user device, or the like.

The terminal device may be a station (ST) in WLAN, a cellular phone, a cordless phone, a session initiation protocol (SIP) phone, a wireless local loop (WLL) station, a personal digital assistant (PDA) device, a handheld device with wireless communication function, a computing device or other processing device connected to a wireless modem, an on-board device, a wearable device and next-generation communication systems, such as a terminal device in a NR network, a terminal device in a public land mobile network (PLMN) that will evolve in the future, or the like.

In the embodiments of the present disclosure, the terminal device may be deployed on the land, including indoor or outdoor, handheld, wearable or vehicular, can also be deployed on the water (such as ships, etc.), and can also be deployed in the air (such as airplanes, balloons, satellites, etc.).

In the embodiments of the present disclosure, the terminal device may be a mobile phone, a pad, a computer with wireless transceiver functions, a virtual reality (VR) terminal device, an augmented reality (AR) terminal device, a wireless terminal in industrial control, a wireless terminal in self-driving, a wireless terminal device in remote medical, a wireless terminal device in smart grid, a wireless terminal device in transportation safety, a wireless terminal device in smart city, a wireless terminal device in smart home, or the like.

In the embodiments of the present disclosure, the terminal device, as an example rather than a limitation, can also be a wearable device. The wearable device can also be called a wearable smart device, and is an umbrella term for wearable devices, such as glasses, gloves, watches, clothing and shoes, for intelligently designing and developing wearable devices for daily wear using wearable technology. The wearable device is a portable device which is directly worn on the body or integrated into the user's clothing or accessories. The wearable device is not only a hardware device, but also powerful functions through software support, data interaction and cloud interaction. Broadly speaking, the wearable smart device includes complete or partial functions which are fully functional, large in size, and may be realized without relying on smart phones, such as smart watches, smart glasses or the like, and functions, such as smart bracelets and jewelry, which only focus on a certain type of application, and need to be used in conjunction with other devices, such as various smart bracelets and smart jewelry for physical monitoring.

The communication system may further include a network device. The network device may be a device for communicating with the mobile device. The network device may be an access point (AP) in WLAN, a base station in GSM or CDMA, such as a base transceiver station (BTS), a base station in WCDMA, such as NodeB (NB), an evolutionary base station, such as evolutionary Node B (eNB or eNodeB) in LTE, a relay station or an access point, or an on-board equipment, a wearable device, a network device in NR network, such as gNB, a network device in future PLMN network.

In the embodiments of the present disclosure, the network device, as an example rather than a limitation, may have mobile characteristics, for example, the network device may be a mobile device. Alternatively, the network device may be a satellite or a balloon station. For example, the satellite may be a low earth orbit (LEO) satellite, a medium earth orbit (MEO) satellite, a geostationary earth orbit (GEO) satellite, a high elliptical orbit (HEO) satellite, or the like. Alternatively, the network device can also be a base station set at land, water, and other positions.

In the embodiments of the present disclosure, the network device can service for a cell. The terminal device communicates with the network device through transmission resources (for example a frequency domain resource, or a spectrum resource) used by the cell. The cell may be a cell corresponding to the network device (such as the base station). The cell may belong to a macro base station or a base station corresponding to a small cell. The small cell herein may include a metro cell, a micro cell, a pico cell, a femto cell, or the like. The small cells have the characteristics of small coverage and low transmission power, and are suitable for providing high-speed data transmission services.

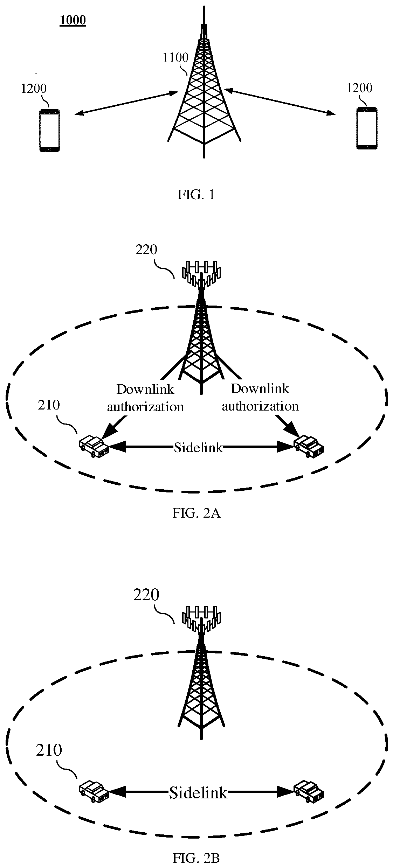

FIG. 1 exemplarily shows a wireless communication system 1000 including one network device 1100 and two terminal devices 1200. Alternatively, the wireless communication system 1000 may include a plurality of network devices 1100, and each network device 1100 may include other numbers of terminal devices within its coverage range, which are not limited in the embodiments of the present disclosure.

Alternatively, the wireless communication system 1000 shown in FIG. 1 may further include mobility management entity (MME), access and mobility management function (AMF), or other network entities, which are not limited in the embodiments of the present disclosure.

It should be understood that a device with communication functions in the network/ system in the embodiments of the present disclosure may be referred to as a communication device. Taking the communication system shown in FIG. 1 as an example, the communication device may include the network device and the terminal device with communication functions, and the network device and terminal device may be the specific devices in the embodiments of the present disclosure, which will not be repeated here. The communication device may further include other devices in the communication system 100, such as a network controller, a mobile management entity or other network entities, which are not limited in the embodiments of the present disclosure.

It should be understood that the terms "system" and "network" are often used interchangeably herein. The term "and/ or" herein describes the association relationship of the associated objects, for example, indicating that there may be three types of relationships between pre and post related objects. For example, A and/ or B can indicate the presence of A alone, both A and B at the same time and B alone. The symbol "/" herein generally indicates that the front and rear associated objects are an "or" relationship.

It should be understood that the "indication" mentioned in the embodiments of the present disclosure may be a direct indication, an indirect indication, or a representation of a related relationship. For example, A indicates B, which can mean that A directly indicates B, for example, B may be obtained through A; mean that A indirectly indicates B, for example, A indicates C, and B may be obtained through C; and also mean that there is an association between A and B.

In the description of the embodiments of the present disclosure, the term "corresponding" can mean that there is a direct or indirect corresponding relationship between the two, or there is an association relationship between the two, or there may be an indicating and being indicated relationship, a configuring and being configured relationship, or the like between the two.

In order to understand the technical solutions in embodiments of the present disclosure, the relevant technologies of embodiments of the present disclosure are detailed below. The following relevant technologies may be used as optional solutions to be combined with any technical solution of embodiments of the present disclosure, all of which belong to the protection scope of the embodiments of the present disclosure.

### (1) LTE D2D/V2X

Vehicle to everything (V2X) communication is a sidelink transmission technology based on D2D. Unlike traditional cellular systems where communication data is received or transmitted through base stations, a vehicle to everything system use direct communication of terminal to terminal, resulting in higher spectral efficiency and lower transmission delay. D2D/V2X can use two transmission modes: Mode 3 and Mode 4.

In Mode 3, as shown in FIG. 2A, a transmission resource of a terminal 210 (such as a vehicle terminal) is allocated by a base station 220, and the terminal 210 transmits data on a sidelink based on the resource allocated by the base station 220. The base station 220 has capable of allocating a single transmission resource for the terminal 210, as well as a semi static transmission resource for the terminal.

In Mode 4, the terminal (such as a vehicle terminal) selects a resource from a resource pool for data transmission. As shown in FIG. 2B, the base station 220 may allocate no resource for the terminal 210 in some scenes.

Being adapted to rapid development of various services, the D2D technology includes following development stages:

Stage 1, Proximity based service (ProSe), in which device to device communication is studied for a scene of ProSe, which mainly involves public security related services.

In the ProSe, as a position of the resource pool in time domain is configured, for example, the resource pool is discontinuous in the time domain, UE can transmit! receive data non-continuously on the sidelink. Thus, this achieves an effect of power saving.

Stage 2, Vehicle to everything (V2X), in which a scene of vehicle-to-vehicle communication is researched, which is mainly aimed at services of relatively high-speed mobile vehicle to vehicle communication and vehicle to person communication.

In V2X, since an onboard system has a continuous power supply, a main issue thereof is not power efficiency, but delay in data transmission. Therefore, in system design, terminal devices are required to continuously transmit and receive data.

Stage 3, Further enhancements to LTE device to device (FeD2D), in which research was conducted on scenes where a wearable device is connected to a network through a mobile phone, which is mainly aimed at scenes with low mobile speeds and low power access.

In FeD2D, an optional implementation is that, the base station can configure discontinuous reception (DRX) parameters of a mobile terminal through a relay terminal, but not standardize DRX configuration yet.

### (2) NR V2X

On a basis of LTE V2X, NR V2X is not limited to broadcast scenes, but further expands to unicast and multicast scenes, and application of V2X is studied in these scenes.

NR V2X supports two resource authorization modes similar to Mode 3 and Mode 4 in LTE V2X, i.e., Mode 1 and Mode 2 (mode-1/2). Furthermore, a user may be in a mixed mode where both Mode 1 and Mode 2 can be used for resource acquisition. The resource acquisition is indicated through sidelink authorization. That is, the sidelink authorization indicates time-frequency positions of corresponding physical sidelink control channel (PSCCH) and physical uplink shared channel (PSSCH) resources.

Unlike LTE V2X, in addition to feedback-free, UE-initiated hybrid automatic repeat request (HARQ) retransmission, NR V2X also introduces feedback-based HARQ retransmission, which is not limited to unicast communication but further includes multicast communication.

### (3) Side UE-2-UE (U2U) relay technology

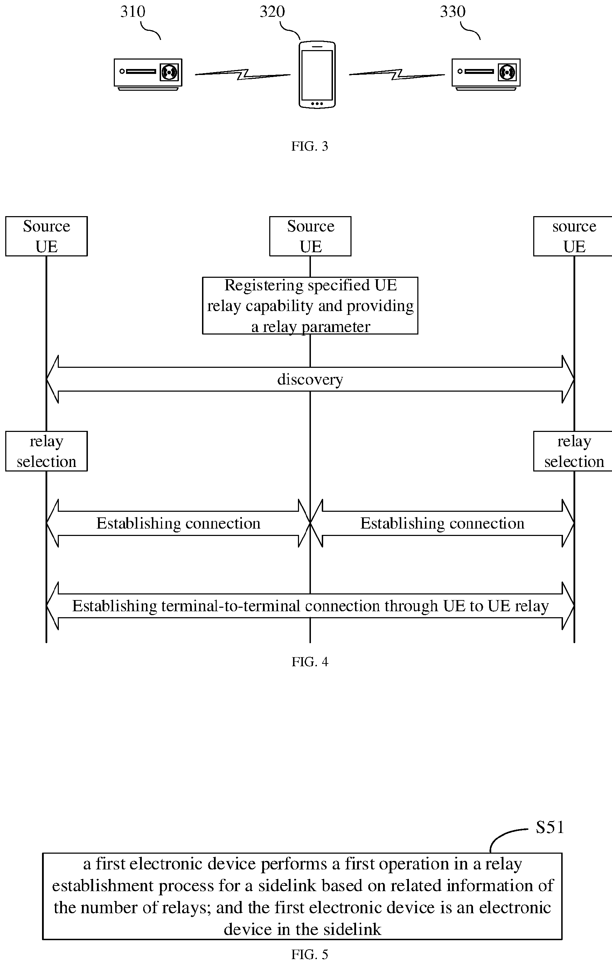

Currently, for ProSe, relevant technologies have studied UE-2-UE relay functions based on Layers 2 and 3 relays. As shown in FIG. 3, a source UE 310 is connected to a target UE 330 through a relay UE 320, and the relay UE 320 transfers data between the source UE 310 and the target UE 320.

The specific steps for connection establishment are shown in FIG. 4. The source UE, the relay UE, and the target UE discover each other through a discovery message or a direct communication request (DCR) message. The relay UE can assist the source UE in forwarding the discovery message or the DCR message. Once the source UE and target UE discover each other, they can perform relay selection to select a suitable relay UE and respectively establish connections with the relay UE. Then, the relay UE serves as a relay to establish a UE-to-UE sidelink (also known as PC5 connection).

### (4) Relay discovery process

### 1. Model A Discovery ("I am here")

This model defines two roles for UE participating in relay discovery, which are (1) a notifying UE, which notifies certain information that may be used by a neighboring UE with discovery permissions, and (2) a monitoring UE, which monitors UEs that are interested in the certain information near the notifying UE.

In this model, the notifying UE broadcasts a discovery message at a predefined discovery interval, and the monitoring UE, which is interested in the message, reads and processes the discovery message.

This model is equivalent to "I am here" because the notifying UE will broadcast its own information.

### 2. Model B Discovery ("Who's there?"/ "Are you there?")

This model defines two roles for UE participating in relay discovery, which are (1) a discovering UE, which transmits a request including certain information about what the UE is interested in to discover, and (2) a discovered UE, which receives the request message and can respond to certain related information of the discoverer's request.

It is equivalent to "who is there/ are you there" because the discovering UE transmits information about contents are wished to be received. The information may be ProSe application identifier corresponding to a group, and members of the group can respond to the information.

### 3. Discovery scheme based on DCR Message

In this scheme, the source UE does not use a discovery message alone to discover, but uses a DCR message instead, to discover the target UE. The source UE broadcasts the DCR message, and the DCR message includes related information of the target UE. After receiving the message, the relay UE forwards the message to the corresponding target UE. Thus, the discovery process is done.

After in-depth research, the inventors of the present disclosure have found that the current research on U2U relay is mainly in single-hop scenes, which is from the source UE to the relay UE to the target UE (i.e., source UE → relay UE → target UE). With multi-hop relay being introduced, the communication range of SL may be further expanded, which is from the source UE to the first relay UE to the second relay UE, and so on, to the target UE (i.e., source UE → 1st relay UE → 2nd relay UE... → target UE). After a plurality of relay devices is introduced, at least one of a relay discovery, selection, and reselection mechanisms will be affected.

The technical solution provided by embodiments of the present disclosure is mainly used to solve at least one of the above problems.

In order to make characteristics and technical content of the embodiments of the present disclosure more understanding, the embodiments of the present disclosure will be described in detail below with reference to the relevant drawings. The accompanying drawings are for reference only and do not limit the embodiments of the present disclosure.

FIG. 5 is a schematic flowchart of a sidelink relaying method according to some embodiments of the present disclosure. This method can alternatively, but is not limited to, be applied to a system shown in FIGS. 1, 2A, or 2B. This method includes operations illustrated at blocks.

At block S51, a first electronic device performs a first operation in a relay establishment process for a sidelink based on relay quantity-related information; and the first electronic device is an electronic device in the sidelink.

Alternatively, in some embodiments of the present disclosure, the relay establishment process includes at least one of a relay discovery process, a relay selection process, and a relay reselection process. The first operation includes, for example, an operation of forwarding the discovery message or the DCR message in the relay discovery process, an operation of selecting a sidelink from a plurality of links forwarding the discovery message or the DCR message in the relay selection process, and an operation of initiating a reselection operation in the relay reselection process.

Alternatively, in embodiments of the present disclosure, the first electronic device may be a terminal device or a relay device in the sidelink. The terminal device may include a source and/or a target device of the discovery message or the DCR message in the relay establishment process. The source device is, for example, the notifying UE in the Model A discovery, the discovering UE in the Model B discovery, or the source UE broadcasting the DCR message in the discovery scheme based on DCR message. The target device is, for example, the monitoring UE in Model A discovery, the discovered UE in Model B discovery, or the target UE of the DCR message in the discovery scheme based on DCR message.

Alternatively, in embodiment of the present disclosure, relay quantity-related information may include any information related to a number of relay devices in the sidelink, such as the maximum number of relays allowed in a system, the number of relay devices existing in the sidelink, which are discovered in the relay discovery process, and the number of relay devices added in the relay discovery process.

According to the sidelink relaying method mentioned above, the first electronic device in the sidelink participates in the relay establishment process for the sidelink and performs relevant operations based on the relay quantity-related information, which is conducive to establishing a sidelink including a plurality of relay devices and expanding the communication range of the sidelink.

Exemplarily, the sidelink includes N relay devices, and N is an integer greater than or equal to 1. For example, terminal devices of the sidelink include a first terminal UE1 and a fourth terminal UE4, and the sidelink further includes two relay devices, i.e., a second terminal UE2 and a third terminal UE3, between the UE1 and the UE4.

Alternatively, the number of relay devices in the sidelink is limited by the maximum number of relays. Specifically, N is less than or equal to the maximum number of relays in the sidelink.

It should be noted that the maximum number of relays is related to the maximum relay hop (MRH). For example, the MRH is the maximum number of relays plus 1, i.e., MRH=N'+1, and N' is the maximum number of relays. It may be understood that any embodiment related to the maximum number of relays may be implemented based on a relationship between the maximum number of relays and the MRH mentioned above.

If the number of relay devices in a path (or link) exceeds the maximum number of relays, that is, the number of message hops in the path exceeds the MRH, the path is considered to be unreachable. For example, given the maximum number of relays being set to 2, the source device may be allowed to pass through two relay devices or three hops at most to reach the target device. That is, the sidelink may include one of (1) Source UE → Target UE, (2) Source UE → First relay UE → Target UE, and (3) Source UE → 1st relay UE → 2nd relay UE → Target UE.

Alternatively, the relay quantity-related information at block S51 above may include the maximum number of relays in the sidelink. For example, the first electronic device can determine whether to forward the discovery message or the DCR message based on the maximum number of relays in the relay discovery process. For another example, the first electronic device can determine the sidelink between the source device and the target device from at least one link that forwards the discovery message or the DCR message based on the maximum number of relays in the relay selection process.

Alternatively, the maximum number of relays is pre-configured or configured by at least one of a network device and the first electronic device.

For example, the maximum number of relays may be a standardized fixed-value. For another example, the first electronic device may receive first configuration information from the network device and determine the maximum number of relays based on the first configuration information. For yet another example, the first electronic device such as the source device, the relay device, or the target device, may perform a configuration operation of the maximum number of relays in the relay establishment process, so as to set the maximum number of relays.

Alternatively, the maximum number of relays is configured based on at least one of: relay capability of at least one relay device in the sidelink; a service type of the sidelink; and Quality of service (QoS) of the sidelink.

The at least one relay device mentioned above may include all or part of relay devices in the sidelink.

Alternatively, in the embodiments of the present disclosure, the first electronic device can perform related operations of the relay discovery process.

Alternatively, the relay quantity-related information at block S51 above may include the following: first hop counter in a first message, and/or, a first hop device list in the first electronic device.

The first message is configured for a relay discovery process for the first sidelink, and the first hop counter is configured to indicate a number of electronic devices that have forwarded the first message. The first hop device list is determined based on a number of hops between the first electronic device and each device of at least one device.

Alternatively, the first message is a discovery message or a DCR message.

Since the first hop counter is configured to indicate the number of electronic devices that have forwarded the first message, or the first hop counter is configured to indicate the number of hops (hereinafter referred to as "hop counter") for the first message. Thus, the electronic device needs to modify the first hop counter in a case where the electronic device forwards the first message, such that the first hop counter is incremented.

Exemplarily, a source device of the first message can broadcast and transmit the first message. The source device broadcasts a discovery message or a DCR message, and the discovery message or the DCR message carries the first hop counter. The first hop counter is 0, indicating that the number of electronic devices that have forwarded the message is 0. If the first electronic device receives the message and determines that it can forward the message, the first electronic device modifies the first hop counter to be 1 and forwards the modified message to indicate that the number of electronic devices that have forwarded the message is 1. That is, the number of relays existing in the link is 1.

It may be understood that the number of electronic devices that have forwarded the first message, which is indicated by the first hop counter can represent the number of relay devices existing in the current link, i.e., the number of existing relay devices in the link discovered in the relay discovery process. The first hop device list may be configured to determine the number of hops between the first electronic device and the target device of the first message, and thus, is related to the number of relay devices added in the link. Based on this, the relay establishment process is performed based on the first hop counter in the first message and/ or the first hop device list, which is beneficial for controlling the number of relays in the sidelink.

Exemplarily, performing, by a first electronic device, a first operation in a relay establishment process for a sidelink based on relay quantity-related information, includes the following: determining, by the first electronic device, whether to forward the first message based on the relay quantity-related information, in response to receiving the first message.

Alternatively, determining, by the first electronic device, whether to forward the first message based on the relay quantity-related information, includes the following: forwarding, by the first electronic device, the first message, in response to the number of hops indicated by the first hop counter being less than a first threshold.

For example, the first electronic device is a relay device in a first sidelink.

The first electronic device determines whether to forward the first message based on whether the number of electronic devices that have forwarded the first message is less than a preset first threshold. Thus, this may avoids wasting transmission resources when the first message is continuously forwarded by each electronic device in the relay discovery process.

Alternatively, the first threshold is the maximum number of relays in the first sidelink. That is, in a case where a maximum number of relays configured in a system, the relay device forwards the first message only when the number of hops for the first message is less than the maximum number of relays.

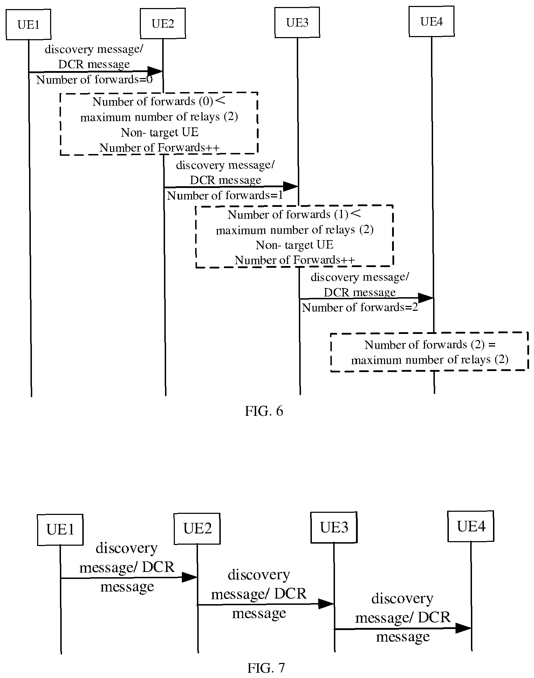

FIG. 6 shows a schematic view of a relay discovery process for the above first sidelink. UE1 is a source device of the relay discovery and initiates transmission of a discovery message or DCR message. A maximum number of relays is pre-configured to be 2 in the system.

As shown in FIG. 6, the relay discovery process includes following operations.

At step 1, UE1 broadcasts and transmits a first message. The first message is a discovery message or a DCR message. The first message includes related information of a target device such as L2 (data link layer) identifier (ID) information or high-level identification information, service related information, and first hop counter.

The first hop counter is 0, indicating that a number of forwards of the first message is equal to 0.

If the maximum number of relays may be configured by the source device, the first message further includes an indication of the maximum number of relays, indicating that the maximum number of relays is 2.

At step 2, the first electronic device forwards the first message from the UE1 in following conditions, which are a condition that the first electronic device is determined not to be the target UE based on the related information of the target device, a condition that the first electronic device receives the first message from the UE1 and is authorized as a relay device for U2U, and a condition that a relay of a service corresponding to the first message is determined to be supported based on an upper-level rule, and a conditions that the first hop counter in the first message is less than the maximum number of relays.

The first electronic device sets the first hop counter in the first message to be added with 1 (i.e., first hop counter++).

FIG. 6 provides specific examples using the first electronic device including UE2 and UE3 as examples. Both the UE2 and the UE3 are not target UEs, are authorized as relay devices for U2U, and support the relay of a service corresponding to the first message.

The UE2 receives the first message transmitted by the UE1. Since the first hop counter in the first message indicates the number of forwards is 0 at this time, and the number of forwards is less than the maximum number of relays (i.e., 2), the UE2 set the first hop counter to be added with 1 and forwards the first message. Then, the first hop counter is 1, indicating that the number of forwards is 1.

The UE3 receives the first message forwarded by the UE2. Since the first hop counter in the first message indicates the number of forwards is 1 at this time, and the number of forwards is less than the maximum number of relays (i.e., 2), the UE3 sets the first hop counter to be added with 1 and forwards the first message. Then, the first hop counter is 2, indicating the number of forwards of 2.

The first electronic device may further include UE4. In a case where UE4 is not a target UE and is authorized as a relay device for U2U, and supports the relay of the service corresponding to the first message, if the UE4 receives the first message transmitted by the UE3 as shown in FIG. 6, the UE4 will no longer forward the first message because the first hop counter in the first message indicates the number of forwards is 2 and the number of forwards is equal to the maximum number of relays (2).

At step 3, the UE4 provides feedback on the first message when the UE4 is the target UE.

Specifically, the UE4 transmits a DCR message to the UE1 through the relay UEs if the first message is a discovery message in Model A discovery.

The UE4 responds to a discovery message if the first message is the discovery message in Model B discovery.

The UE4 transmits a direct communication answer (DCA) message if the first message is a DCR message.

According to the relaying shown in FIG. 6, when the discovery message or DCR message carries the number of forwards experienced by the message, the first electronic device determines whether to transmit the discovery message or the DCR message based on the number of forwards. If the number of forwards is equal to the maximum number of relays and the first electronic device is not the target device of the message, the received discovery message or DCR message will no longer be forwarded. Thus, this avoids invalid forwarding of the discovery message or DCR message.

Some embodiments of the present disclosure also provide another exemplary manner of determining whether to forward the first message based on the relay quantity-related information. Specifically, The first electronic device determines whether to forward the first message based on the relay quantity-related information, including the following.

The first electronic device determines whether the number of hops between the first electronic device and a target device of the first message is less than or equal to a third threshold based on a first hop device list.

In response to the number of hops being less than or equal to the third threshold, the first electronic device forwards the first message.

It should be noted that in the embodiments of the present disclosure, the number of hops between device A and device B may refer to the number of transmissions of a message when the message is transmitted from device A to device B, and the number of transmissions of the message is related to the number of relay devices between device A and device B. For example, if there is a relay device UE2 between the UE1 and the UE3 and a sidelink from the UE1 to the UE3 is the UE1 to the UE2 to the UE3 (i.e., UE1 → UE2 → UE3), the number of transmissions of a message when the message is transmitted from the UE1 to the UE2 is 2, including a transmission from the UE1 to the UE2 and a transmission from the UE2 to the UE3. Thus, the number of hops between the UE1 and the UE3 is 2.

The first hop device list may include related information of M electronic devices, and M is an integer greater than or equal to 1. The related information herein may include identification information of an electronic device, such as ID.

In the above examples, the first hop device list is used to determine whether the first electronic device can hop to the target device within a limited number of hops, so as to determine whether to forward the first message. This may avoid waste of transmission resources caused as each electronic device continuously forwards the first message in the relay discovery process.

Alternatively, the first electronic device determines whether the number of hops between the first electronic device and the target device of the first message is less than or equal to the third threshold based on the first hop device list, including the following.

In response to the first hop device list including related information of the target device, the first electronic device determines that the number of hops between the first electronic device and the target device is less than or equal to the third threshold.

For example, the first hop device list is a list of electronic devices that have the number of hops with the first electronic device, which is less than or equal to the third threshold such as the maximum number of relays. Or the first hop device list is a list of electronic devices to which the first electronic device may hop. The list includes IDs of M electronic devices. If the first message includes ID of the target device, the target device is determined to be one of the M electronic devices based on the ID of the target device in the first message and the IDs of the M electronic devices in the list. Thus, the first electronic device determines that the first electronic device can get to the target device and forward the first message.

Alternatively, the first hop device list may further include the number of hops between the first electronic device and each of M electronic devices. For example, a hop device list in the UE2 in FIG. 6 may include ID of UE3 and the number of hops between the UE2 and the UE3, which is 1.

Alternatively, the first electronic device determines whether the number of hops between the first electronic device and the target device of the first message is less than or equal to the third threshold based on the first hop device list, including the following.

In response to the first hop device list including the related information of the target device, the first electronic device determines whether the number of hops between the first electronic device and the target device is less than the third threshold based on the related information of the target device; wherein the related information of the target device is configured to indicate the number of hops between the first electronic device and the target device. Alternatively, the third threshold is determined based on a maximum number of relays in the first sidelink and/ or the first hop counter in the first message.

By setting the third threshold, whether the first electronic device may hop to the target device is determined based on the number of hops between the first electronic device and the target device. For example, the first hop device list includes the number of hops between the first electronic device and each of M electronic devices. If the first hop device list includes the number of hops between the first electronic device and the target device, the first electronic device may determine whether the target device is an electronic device to which the first electronic device may hop in the following manner.

In manner 1, the third threshold is the maximum number of relays. If the number of hops between the first electronic device and the target device is less than or equal to the maximum number of relays, the target device is determined to be an electronic device to which the first electronic device may hop. Otherwise, the target device is determined to not be the electronic device to which the first electronic device may hop.

In manner 2, the third threshold is determined based on the maximum number of relays and the first hop counter. For example, a difference between the maximum number of relays and the first hop counter is considered as the third threshold. If the number of hops between the first electronic device and the target device is less than or equal to the difference between the maximum number of relays and the first hop counter, the target device is determined to be the electronic device to which the first electronic device may hop. Otherwise, the target device is determined to not be the electronic device to which the first electronic device may hop.

Alternatively, the relaying method according to embodiments of the present disclosure may further include maintaining the above hop device list. Exemplarily, each electronic device can maintain its own hop device list. For example, the first electronic device stores the first hop device list, and the second electronic device stores a second hop device list. Each electronic device maintains its own hop device list and determines whether to forward the received discovery or the DCR message based on its own hop device list.

Alternatively, in some embodiments of the present disclosure, the sidelink relaying method further includes that in response to receiving a second message from the second electronic device, the first electronic device updates the first hop device list in the first electronic device; wherein the second message is configured to indicate a second hop device list in the second electronic device.

Exemplarily, the second message may be a same message as the aforementioned first message. For example, the second electronic device needs to establish a sidelink with one target device, so the second electronic device broadcasts a discovery message or transmits a DCR message, and the discovery message or DCR message carries the second hop device list in the second electronic device. The second message may also not a message configured for the relay discovery process for the sidelink. For example, the second electronic device can periodically or irregularly broadcast the second message. Thus, the second message also belongs to a discovery message, which is configured to transmit the second hop device list in the second electronic device to other electronic devices.

Alternatively, the first electronic device updates the first hop device list in the first electronic device, including that the first electronic device updates the first hop device list based on related information of the second electronic device and/ or related information of a third electronic device in the second hop device list.

For example, since the first electronic device can receive the second message transmitted by the second electronic device, the second electronic device is one to which the first electronic device can hop, and related information such as ID or address of the second electronic device is added to the first hop device list. For another example, since the first electronic device can receive the second message transmitted by the second electronic device, and the second hop device list includes IDs of a plurality of electronic devices to which the second electronic device can hop, the first electronic device can hop to the plurality of electronic devices through the second electronic device. Thus, the IDs of the plurality of electronic devices are added into the first hop device list.

Alternatively, the first electronic device updates the first hop device list based on related information of the second electronic device, including the following.

The first electronic device determines a preset first value as the number of hops between the first electronic device and the second electronic device.

The first electronic device adds or updates the related information of the second electronic device into the first hop device list based on the number of hops between the first electronic device and the second electronic device, wherein the related information of the second electronic device is configured to indicate the number of hops between the first electronic device and the second electronic device.

For example, the first value is 1. The second electronic device broadcasts its own hop device list. After receiving the hop device list, the first electronic device determines that the first electronic device can hop to the second electronic device in a single hop. That is, the number of hops between the first electronic device and the second electronic device is determined to be 1. If the first hop device list includes the number of hops corresponding to the second electronic device, the number of hops corresponding to the second electronic device in the first hop device list is updated to 1. If the first hop device list does not include the number of hops corresponding to the second electronic device, the number of hops corresponding to the second electronic device, i.e., 1, is added into the first hop device list.

Alternatively, the first electronic device updates the first hop device list based on the related information of the third electronic device in the second hop device list, including the following.

The first electronic device determines the number of hops between the second electronic device and the third electronic device based on the related information of the third electronic device in the second hop device list.

The first electronic device determines the number of hops between the first electronic device and the third electronic device based on the number of hops between the second electronic device and the third electronic device.

The first electronic device updates the first hop device list based on the number of hops between the first electronic device and the third electronic device.

Exemplarily, the first electronic device may add 1 to the number of hops between the second device and the third electronic device to obtain the number of hops between the first device and the third electronic device.

For example, UE1 receives the hop device list, which records the number of hops between UE2 and UE4, i.e., 2, from the UE2, and the UE1 can hop to the UE4 through one hop between the UE1 and the UE2 and two hops between the UE2 and the UE4. The UE1 can determine that the number of hops between the UE1 and the UE4 is 3, and update the first hop device list with 3.

Alternatively, the first electronic device updates the first hop device list based on the number of hops between the first electronic device and the third electronic device, including that the first electronic device updates the related information of the third electronic device in the first hop device list based on the number of hops between the first electronic device and the third electronic device, in response to the first hop device list comprising the related information of the third electronic device, and/or, the first electronic device adds the related information of the third electronic device into the first hop device list, in response to the first hop device list not comprising the related information of the third electronic device, wherein the related information of the third electronic device is configured to indicate the number of hops between the first electronic device and the third electronic device.

Alternatively, the first electronic device may also set a condition for which the related information of the third electronic device is added into the first hop device list. Only when the condition is met, the related information of the third electronic device may be added into the first hop device list. Specifically, the first electronic device adds the related information of the third electronic device into the first hop device list, including that the first electronic device adds the related information of the third electronic device into the first hop device list, in response to the number of hops between the first electronic device and the third electronic device meeting a third condition.

For example, the third condition includes that the number of hops between the first electronic device and the third electronic device is less than or equal to the maximum number of relays.

It may be understood that if the number of hops between the first electronic device and the third electronic device is greater than the maximum number of relays, a sidelink, which meets the maximum number of relays, fails to be established between the first electronic device and the third electronic device according to the above relay discovery mechanism. Thus, only in a case where the number of hops between the first electronic device and the third electronic device is less than or equal to the maximum number of relays, the related information of the third electronic device is added to reduce redundant data storage.

Alternatively, a valid duration of information in the hop device list may also be set to adapt to mobility of an electronic device in the sidelink, reducing the storage of unnecessary information. Exemplarily, after the first hop device list is updated, the method further includes that the first electronic device sets or resets a valid duration of the related information of the second electronic device and/ or a valid duration of the related information of the third electronic device in the first hop device list.

For example, if the first hop device list includes related information of the second electronic device and/ or related information of the third electronic device before the list is updated, a valid duration of the related information is reset after the list is updated. If the first hop device list does not include related information of the second electronic device and/ or related information of the third electronic device before the list is updated, a valid duration of the related information is set after the list is updated.

Alternatively, the method further includes that the first electronic device deletes the related information of the second electronic device and/ or the related information of the third electronic device from the first hop device list, in response to the valid duration of the related information of the second electronic device expiring and/ or the valid duration of the related information of the third electronic device expiring.

An implementation of forwarding the first message based on a hop device list is described with specific application examples below.

In an application example, a UE updates its own hop device list after receiving a second message from other UEs. The details are as follows.

(1) If a UE ID in a hop device list in the second message is an existing UE ID in its own hop device list, the UE determines whether the number of hops (i.e. Hop information) will be updated. Alternatively, the number of hops corresponding to the UE ID can be found in the hop device list in the second message, and the number of hops updated with the UE ID may be obtained as the found number of hops corresponding to the UE ID is added with 1. Alternatively, the number of hops corresponding to the UE ID can be found in the hop device list in the second message, and a value is obtained as the found number of hops corresponding to the UE ID is added with 1. The minimum one of the obtained value and the numbers of hops corresponding to the UE ID recorded in the list is determined as the updated number of hops corresponding to the UE ID. Alternatively, the number of hops in which the second message is transmitted by the UE is set to 1.

After the updating above, the valid duration of the related information is reset.

(2) If the UE ID in the hop device list in the second message is not an existing UE ID in its own hop device list, whether the UE ID is an ID of which can hop to the UE is determined based on whether the number of hops corresponding to the UE ID in the hop list in the second message is less than or equal to (MRH-1), i.e., the maximum number of relays. If the UE ID is an ID of which can hop to the UE, the UE ID and the number of hops corresponding to the UE ID are added into the hop device list, and the valid duration of the related information is set.

(3) If a valid duration of information expires, the information is deleted.

According to the above implementation, if a hop device list in UE2 that UE3 receives is

| UE_ID | Hop information (the number of hops) |
|---|---|
| UE1 | 1 |
| UE3 | 1 |
| UE4 | 2 |

a hop device list in UE3 may be updated to:

| UE_ID | Hop information (the number of hops) |
|---|---|
| UE1 | 2 |
| UE2 | 1 |
| UE4 | 1 |

As shown in FIG. 7, a process in which UE2 and UE3 forwards the first message by using a hop device list may include the following.

At step 1, UE1 (the source UE) broadcasts and transmits the first message (the discovery message or the DCR message). The first message includes target UE information (indicating UE4 is the target UE) such as L2 ID information or high-level identification information, and service-related information.

At step 2, UE2 or UE3 (the relay UEs) forwards the first message from the UE1 in following conditions, which are a condition that UE2 or UE3 determines it is not the target UE, a condition that UE2 or UE3 receives the first message from the UE1 and is authorized a relay device for U2U, a condition that UE2 or UE3 determines it supports a relay of a service corresponding to the first message according to an upper-level rule, and a condition that UE2 or UE3 determines the target UE as the reachable UE based on a hop device list.

At step 3, UE4 (the target UE) provides feedback on the first message.

Specifically, the UE4 transmits a DCR message to the UE1 through the relay UEs if the first message is a discovery message in Model A discovery.

The UE4 responds to a discovery message if the first message is the discovery message in Model B discovery.

The UE4 transmits a direct communication answer (DCA) message if the first message is a DCR message.

It can be seen that according to the above example method, each electronic device maintains its own hop device list, and forwards the discovery or DCR message based on the hop device list, thereby avoiding invalid forwarding of the discovery message or DCR message, and being conducive to establishing a sidelink for the plurality of relay devices.

Alternatively, the relay quantity-related information includes the number of relay devices in each link of the at least one link forwarding a third message, and the third message is configured for a relay discovery process for a second sidelink.

Alternatively, the sidelink relaying method provided by some embodiments of the present disclosure may further include contents about a relay selection process. Specifically, the first electronic device performs the first operation in the relay establishment process for the sidelink based on the relay quantity-related information, including that the first electronic device determines the second sidelink from the at least one link based on the number of relay devices in each link of the at least one link.

Exemplarily, the first electronic device may choose a link with the number of relay devices less than a fourth threshold or the minimum number of relay devices as the second sidelink.

For example, after the source device UE1 broadcasts a discovery message, UE2 and UE5 receive the discovery message. UE2 forwards the discovery message to the UE3, and UE3 forwards the discovery message to the target device UE4. UE5 forwards the discovery message to the UE4. Therefore, there obtains two links, i.e., UE1 → UE2 → UE3 → UE4 and UE1 → UE5 → UE4. UE1 or UE4 may select the link UE1 → UE5 → UE4 with the smaller number of relay devices as the second sidelink.

Alternatively, the third message includes a discovery message and/ or a DCR message.

In some scenes, the first message and third message may be the same message, and the first sidelink and the second sidelink can also be the same link. For example, the first electronic device is a relay device for the first message, forwards the first message to establish the first sidelink, and determines the second sidelink from at least one link that forwards the first message.

In some scenes, the first and third messages may be different messages, and the first sidelink and the second sidelink can also be different links. For example, the first electronic device is a relay device in the first sidelink and forwards the first message from other devices. The first electronic device is a terminal device in the second sidelink, and determines the second sidelink from at least one link forwarding the third message.

Alternatively, the first electronic device determines the second sidelink from at least one link based on the number of relay devices in each link of the at least one link, including that the first electronic device determines the second sidelink from the at least one link based on the number of relay devices in each link of the at least one link and first information.

The first information includes at least one of: a link quality parameter, buffer capacity of a relay device, a channel busy ratio, and a high-level indication.

Alternatively, the link quality parameter may include SL-reference signal received power of a sidelink, SL-discovery RSRP (SD-RSRP) discovered in the sidelink, and the like.

Alternatively, the high-level indication includes a relay service code (RSC) indication.

For example, the first electronic device may select K links with the minimum number of relay devices as candidate links, and determine the second sidelink from the candidate links based on the first information. K is an integer greater than or equal to 2. Alternatively, the first electronic device can determine K candidate links based on the first information, and then select a link with the minimum number of relay devices among the K candidate links as the second sidelink.

Alternatively, the sidelink relaying method provided by some embodiments of the present disclosure may further include contents about a relay selection process. Specifically, the sidelink relaying method may further include that the first electronic device initiates a relay reselection process for a third sidelink.

The embodiments of the present disclosure provide two alternative example relay reselection mechanisms.

In example 1, the first electronic device is a source device of a fourth message. The fourth message is configured for the relay discovery process for the third sidelink.

Specifically, the third sidelink is discovered based on the fourth message. No matter which sub-link of the third sidelink triggers relay reselection, the third sidelink is disconnected, and the source device of the fourth message initiates the relay reselection.

In example 2, the first electronic device is an electronic device near a source device in a sub-ink triggering relay reselection in the third sidelink.

For example, the third sidelink is UE1 → UE2 → UE3 → UE4. If the relay reselection process for the third sidelink being triggered due to poor link quality or disconnection of a sub-link between UE2 and UE3, UE2 initiates the relay reselection process because UE2 is close to the source device UE1.

Alternatively, the relay reselection process is initiated by the first electronic device in response to at least one of following conditions being met: at least one sub-link of the third sidelink being disconnected; link quality of the at least one sub-link being lower than a second threshold; and a fourth sidelink existing between a source device and a target device of the third sidelink; wherein a number of relay devices in the fourth sidelink is less than that in the third sidelink, or link quality of the fourth sidelink is higher than that of the third sidelink.

For example, in some embodiments of the present disclosure, the link quality may be represented by SL-RSRP and/ or SD-RSRP.

The specific settings and implementations provided by the embodiments of the present disclosure are described from different perspectives with multiple embodiments. In at least one embodiment mentioned above, the first electronic device in the sidelink performs related operations in the relay discovery process and/ or relay selection process and/ or relay reselection process for the sidelink based on relay quantity-related information. Thus, this is conducive to establish a sidelink including the plurality of the relay devices and expands the communication range of the sidelink.

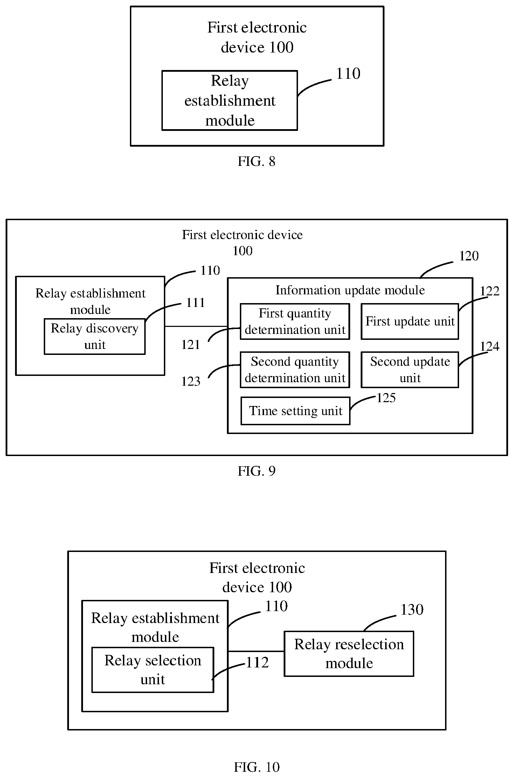

Correspondingly to the method of at least one embodiment mentioned above, some embodiments of the present disclosure also provide a first electronic device 100, shown in FIG. 8, including the following.

A relay establishment module 110 is configured to perform a first operation in a relay establishment process for a sidelink based on relay quantity-related information. The first electronic device is an electronic device in the sidelink.

Alternatively, the relay quantity-related information includes a maximum number of relays in the sidelink.

Alternatively, the maximum number of relays is pre-configured or configured by at least one a network device and the first electronic device.

Alternatively, the maximum number of relays is configured based on at least one of relay capability of the at least one relay device in the sidelink; a service type of the sidelink; and Quality of service (QoS) of the sidelink.

Alternatively, the relay quantity-related information includes first hop counter in the first message, and/or, a first hop device list in the first electronic device. The first message is configured for a relay discovery process for the first sidelink, and the first hop counter is configured to indicate a number of electronic devices that have forwarded the first message. The first hop device list is determined based on a number of hops between the first electronic device and each device of at least one device.

Alternatively, the first message is a discovery message or a direct communication request (DCR) message.

Alternatively, as shown in FIG. 9, the relay establishment module 110 includes: a relay discovery unit 111 configured to determine whether to forward the first message based on relay quantity-related information in response to receiving the first message.

Alternatively, the relay discovery unit 111 is specifically configured to forward the first message in response to the number of hops indicated by the first hop counter being less than a first threshold.

Alternatively, the first threshold is a maximum number of relays in the first sidelink.

Alternatively, the relay discovery unit 111 is specifically configured to determine whether the number of hops between the first electronic device and the target device of the first message is less than or equal to a third threshold based on the first hop device list, and forward the first message, in response to the number of hops between the first electronic device and the target device being less than or equal to the third threshold, the first electronic device forwards the first message.

Alternatively, the relay discovery unit 111 is specifically configured to determine that the number of hops between the first electronic device and the target device is less than or equal to the third threshold in response to the first hop device list including related information of the target device.

Alternatively, the relay discovery unit 111 is specifically configured to determine whether the number of hops between the first electronic device and the target device is less than the third threshold based on related information of the target device in response to the first hop device list including the related information of the target device; and the related information of the target device is configured to indicate the number of hops between the first electronic device and the target device.

Alternatively, the third threshold is determined based on the maximum number of relays in the first sidelink and/ or the first hop counter in the first message.

Alternatively, as shown in FIG. 9, the first electronic device 100 further includes an information update module 120 configured to update the first hop device list in the first electronic device in response to receiving a second message from a second electronic device; and the second message is configured to indicate a second hop device list in the second electronic device.

Alternatively, the information update module 120 is specifically configured to update the first hop device list based on related information of the second electronic device and /or related information of a third electronic device in the second hop device list.

Alternatively, the information update module 120 includes a first quantity determination unit 121 and a first update unit 122.

The first quantity determination unit 121 is configured to determine a preset first value as a number of hops between the first electronic device and the second electronic device.

The first update unit 122 is configured to add or update the related information of the second electronic device into the first hop device list based on the number of hops between the first electronic device and the second electronic device, and the related information is configured to indicate the number of hops between the first electronic device and the second electronic device.

Alternatively, the information update module 120 includes a second quantity determination unit 123 and a second update unit 124.

The second quantity determination unit 123 is configured to determine a number of hops between the second electronic device and the third electronic device based on the related information of the third electronic device in the second hop device list, and to determine a number of hops between the first electronic device and the third electronic device based on the number of hops between the second electronic device and the third electronic device.

The second update unit 124 is configured to update the first hop device list based on the number of hops between the first electronic device and the third electronic device.

Alternatively, the second update unit 124 is specifically configured to update the related information of the third electronic device in the first hop device list based on the number of hops between the first electronic device and the third electronic device in response to the first hop device list including the related information of the third electronic device; and/or, add the related information of the third electronic device into the first hop device list in response to the first hop device list not including the related information of the third electronic device, and the related information is configured to indicate the number of hops between the first electronic device and the third electronic device.

Alternatively, the second update unit 124 is specifically configured to add the related information of the third electronic device into the first hop device list in response to the number of hops between the first electronic device and the third electronic device meeting a third condition.

Alternatively, the third condition includes: the number of hops between the first electronic device and the third electronic device being less than or equal to a maximum number of relays.

Alternatively, as shown in FIG. 9, the information update module 120 further includes a time setting unit 125.

The time setting unit 125 is configured to set or reset a valid duration of the related information of the second electronic device and/ or a valid duration of the related information of the third electronic device in the first hop device list.

Alternatively, the time setting unit 125 is also configured to delete the related information of the second electronic device and/ or the related information of third electronic device from the first hop device list in response to the valid duration of the related information of the second electronic device and/ or the related information of third electronic device having exceeded.

Alternatively, the relay quantity-related information includes a number of relay devices in each link of the at least one link forwarding a third message, and the third message is configured for the relay discovery process for the second sidelink.

Alternatively, as shown in FIG. 10, the relay establishment module 110 includes a relay selection unit 112.

The relay selection unit 112 is configured to determine the second sidelink from at least one link based on the number of relay devices in each link of the at least one link.

Alternatively, the relay selection unit 112 is specifically configured to determine the second sidelink from at least one link based on the number of relay devices in each link of the at least one link and the first information.

The first information includes at least one of: a link quality parameter, buffer capacity of a relay device, a channel busy ratio, and a high-level indication.

Alternatively, the high-level indication includes a relay service code indication.

Alternatively, as shown in FIG. 10, the first electronic device further includes a relay reselection module 130.

The relay reselection module 130 is configured to initiate the relay reselection process for the third sidelink.

Alternatively, the first electronic device is a source device of the fourth message or an electronic device close to the source device in a sub-link that triggers reselection in the third sidelink, and the fourth message is configured for the relay discovery process for the third sidelink.

Alternatively, the relay reselection module 130 is configured to initiate the relay reselection process in response to at least one of following conditions being met: at least one sub-link of the third sidelink being disconnected; link quality of the at least one sub-link being lower than a second threshold; and a fourth sidelink existing between the source device and the target device in the third sidelink; the number of relay devices in the fourth sidelink is less than that in the third sidelink, or the link quality of the fourth sidelink is higher than that of the third sidelink. The first electronic device 100 provided by some embodiments of the present disclosure can achieve the corresponding functions of the first electronic device in the method embodiments mentioned above. The corresponding processes, functions, implementation methods, and beneficial effects of each module (sub-module, unit, or component, etc.) in the first electronic device 100 can be seen in the corresponding description of the above method embodiment, and will not be repeated here. It should be noted that the functions of each module (sub-module, unit or component, etc.) in the first electronic device 100 of the embodiments of the present disclosure may be executed by different modules (sub-module, unit or component, etc.) or by the same module (sub-module, unit or component, etc.). For example, the relay establishment module and the relay reselection module may be different modules or the same module, and all of them can achieve their corresponding functions in the embodiments of the present disclosure. In addition, the communication module in the embodiment of the present disclosure may be implemented through a transceiver of the device, and some or all of the other modules may be implemented through the processor of the device.

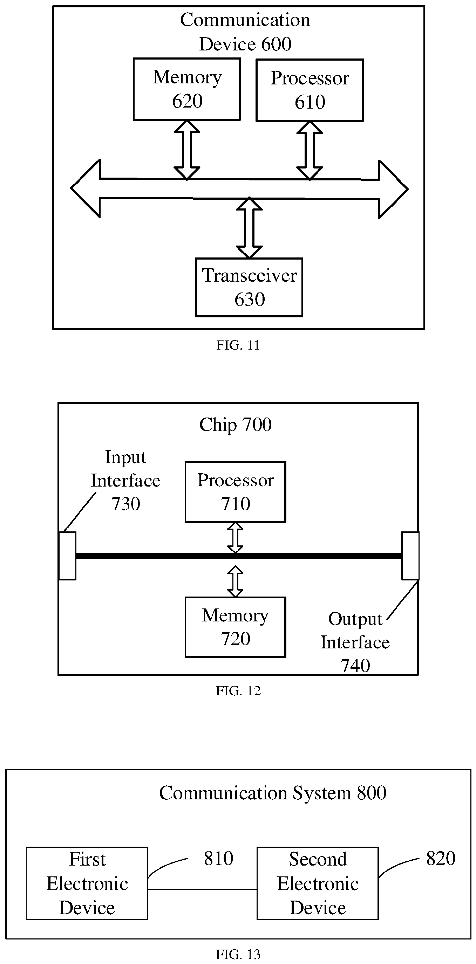

FIG. 11 is a schematic structure view of a communication device 600 according to some embodiments of the present disclosure. The communication device 600 includes a processor 610. The processor 610 may call and run a computer program from a memory to execute the method in the embodiments of the present disclosure.

Alternatively, communication device 600 may further include a memory 620. The processor 610 may call and run the computer program from the memory 620 to execute the method in the embodiments of the present disclosure.

The memory 620 may be a separate device from the processor 610 or may be integrated into the processor 610.

Alternatively, the communication device 600 may further include a transceiver 630. The processor 610 may control the transceiver 630 to communicate with other devices. Specifically, the transceiver 630 is controlled to transmit information or data to the other devices, or to receive information or data transmitted by the other devices.

The transceiver 630 may include a transmitter and a receiver. The transceiver 630 may further include an antenna, and the number of antennas may be one or more.

Alternatively, the communication device 600 may be the first electronic device and/ or the second electronic device of the embodiments of the present disclosure, and the communication device 600 may execute the corresponding processes executed by the first electronic device and/ or the second electronic device in the various methods of the embodiments of the present disclosure. For simplicity, which will not be repeated herein for brevity.

FIG. 12 is a schematic structure view of a chip 700 according to some embodiments of the present disclosure. The chip 700 includes a processor 710. The processor 710 can call and run a computer program from memory to execute the method in the embodiments of the present disclosure.

Alternatively, the chip 700 may further include a memory 720. The processor 710 may call and run the computer program from the memory 720 to execute the method in the embodiments of the present disclosure.

The memory 720 may be a separate device from the processor 710 or may be integrated into the processor 710.

Alternatively, the chip 700 may further include an input interface 730. The processor 710 may control the input interface 730 to communicate with other devices or chips. Specifically, the input interface 730 is controlled to obtain information or data transmitted by other devices or chips.

Alternatively, the chip 700 may further include an output interface 740. The processor 710 may control the output interface 740 to communicate with other devices or chips. Specifically, the output interface 740 is controlled to output information or data to other devices or chips.

Alternatively, the chip may be applied to the first electronic device in the embodiments of the present disclosure, and the chip may execute the corresponding processes executed by the first electronic device in various methods of the embodiments of the present disclosure, which will not be repeated herein for brevity.

It should be understood that the chip referred to in embodiments of the present disclosure may also be referred to a system-level chip, system chip, chip system, system-on chip, or the like.

The above processor may be a general-purpose processor, a digital signal processor (DSP), a field programmable gate array (FPGA), an application specific integrated circuit (ASIC), or other programmable logic device, transistor logic device, discrete hardware component, or the like. The above universal processor may be a micro-processor or any conventional processor.

The memory mentioned above may be volatile memory or non-volatile memory, or may include both volatile and non-volatile memory. The non-volatile memory may be a read-only memory (ROM), a programmable read-only memory (PROM), an erasable programmable read-only memory (EPROM), an electrically erasable programmable read-only memory (EEPROM), or a flash memory. Volatile memory may be a random access memory (RAM).

It should be understood that the above memories are exemplary but not limiting descriptions. For example, the memory in the embodiments of the present disclosure may also be a static random access memory (SRAM), a dynamic random access memory (DRAM), a synchronous dynamic random access memory (SDRAM), a double data rate SDRAM (DDR SDRAM), an enhanced synchronous dynamic random access memory (ESDRAM), a synchronous link DRAM (SLDRAM), and a direct memory bus random access memory (DR RAM), etc. That is to say, the memory in the embodiments of the present disclosure is intended to include, but not limited to, these and any other suitable types of memories.

FIG. 13 is a schematic structural view of a communication system 800 according to some embodiments of the present disclosure. The communication system 800 includes a first electronic device 810 and/ or a second electronic device 820, to execute the method in the embodiments of the present disclosure.

In the above embodiments, implementation may be in whole or in part by software, hardware, firmware, or any combination thereof. When implemented using software, the implementation may be in whole or in part in the form of a computer program product. The computer program product includes one or more computer instructions. When loading and executing the computer program instructions on a computer, all or part of the processes or functions described in the embodiments of the present disclosure are generated. The computer may be a general-purpose computer, a specialized computer, a computer network, or other programmable device. The computer instruction may be stored in a computer-readable storage medium or transmitted from one computer-readable storage medium to another computer-readable storage medium, for example, the computer instruction may be transmitted from a website, a computer, a server or data center to another website site, computer, server, or data center through wired ((e.g., coaxial cable, fiber optic, digital subscriber line (DSL)) or wireless (e.g., infrared, wireless, microwave, etc.) methods. The computer-readable storage medium may be any available media that a computer is capable of storing or a data storage device such as a server, data center, etc. that contains one or more available media integrated. The available media may be magnetic media, (e.g., floppy disk, hard disk, magnetic tape), optical media (e.g., DVD), or semiconductor media (e.g., solid state disk (SSD)), etc.

It should be understood that in various embodiments of the present disclosure, the size of the sequence numbers of the above processes does not imply the order of execution. The execution order of each process should be determined based on its function and internal logic, and should not constitute any restrictions on the implementation process of the embodiments of the present disclosure.

It will be understood by those of ordinary skill in the art that for the convenience and conciseness of the description, the specific working processes of the system, the device, and unit described above can refer to the corresponding processes in the aforementioned method embodiments, and will not be repeated here.

The foregoing is only a specific implementation of the present disclosure, but the scope of the present disclosure is not limited thereto, and any changes or substitutions that may be readily thought of by those skilled in the art within the scope of the technology disclosed in the present disclosure shall be covered by the scope of the present disclosure. Therefore, the scope of the present disclosure shall be stated to be subject to the scope of the claims.

## Claims

1. A sidelink relaying method, comprises:
performing, by a first electronic device, a first operation in a relay establishment process for a sidelink based on relay quantity-related information;
wherein the first electronic device is an electronic device in the sidelink.

2. The method as claimed in claim 1, wherein the relay quantity-related information comprises a maximum number of relays in the sidelink.

3. The method as claimed in claim 2, wherein the maximum number of relays is pre-configured or configured by at least one of a network device and the first electronic device.

4. The method as claimed in claim 2 or 3, wherein the maximum number of relays is configured based on at least one of:
relay capability of at least one relay device in the sidelink,
a service type of the sidelink, and
Quality of Service (QoS) of the sidelink.

5. The method as claimed in any one of claims 1-4, wherein the relay quantity-related information comprises:
first hop counter in a first message, and/or,
a first hop device list in the first electronic device;
wherein the first message is configured for a relay discovery process for a first sidelink, and the first hop counter is configured to indicate a number of electronic devices that have forwarded the first message;
the first hop device list is determined based on a number of hops between the first electronic device and each of at least one device.

6. The method as claimed in claim 5, wherein the first message is a discovery message or a direct communication request (DCR) message.

7. The method as claimed in claim 5 or 6, wherein the performing, by a first electronic device, a first operation in a relay establishment process for a sidelink based on relay quantity-related information, comprises:
determining, by the first electronic device, whether to forward the first message based on the relay quantity-related information, in response to receiving the first message.

8. The method as claimed in claim 7, wherein the determining, by the first electronic device, whether to forward the first message based on the relay quantity-related information, comprises:
forwarding, by the first electronic device, the first message, in response to the number of hops indicated by the first hop counter being less than a first threshold.

9. The method as claimed in claim 8, wherein the first threshold is a maximum number of relays in the first sidelink.

10. The method as claimed in claim 7, wherein the determining, by the first electronic device, whether to forward the first message based on the relay quantity-related information, comprises:
determining, by the first electronic device, whether a number of hops between the first electronic device and a target device of the first message is less than or equal to a third threshold based on the first hop device list;
forwarding, by the first electronic device, the first message, in response to the number of hops between the first electronic device and the target device being less than or equal to the third threshold.

11. The method as claimed in claim 10, wherein the determining, by the first electronic device, whether a number of hops between the first electronic device and a target device of the first message is less than or equal to a third threshold based on the first hop device list, comprises:
determining, by the first electronic device, that the number of hops between the first electronic device and the target device is less than or equal to the third threshold, in response to the first hop device list comprising related information of the target device.

12. The method as claimed in claim 10, wherein the determining, by the first electronic device, whether a number of hops between the first electronic device and a target device of the first message is less than or equal to a third threshold based on the first hop device list, comprises:
determining, by the first electronic device, whether the number of hops between the first electronic device and the target device is less than the third threshold based on related information of the target device, in response to the first hop device list comprising the related information of the target device; wherein the related information of the target device is configured to indicate the number of hops between the first electronic device and the target device.

13. The method as claimed in claim 12, wherein the third threshold is determined based on a maximum number of relays in the first sidelink and/or the first hop counter in the first message.

14. The method as claimed in any one of claims 1-13, further comprising:
updating, by the first electronic device, a first hop device list in the first electronic device, in response to receiving a second message from a second electronic device; wherein the second message is configured to indicate a second hop device list in the second electronic device.

15. The method as claimed in claim 14, wherein the updating, by the first electronic device, a first hop device list in the first electronic device, comprises:
updating, by first electronic device, the first hop device list based on related information of the second electronic device and/ or related information of a third electronic device in the second hop device list.

16. The method as claimed in claim 15, wherein the updating, by first electronic device, the first hop device list based on related information of the second electronic device, comprises:
determining, by the first electronic device, a preset first value as a number of hops between the first electronic device and the second electronic device;
adding or updating, by first electronic device, the related information of the second electronic device into the first hop device list based on the number of hops between the first electronic device and the second electronic device, wherein the related information of the second electronic device is configured to indicate the number of hops between the first electronic device and the second electronic device.

17. The method as claimed in claim 15 or 16, wherein the updating, by first electronic device, the first hop device list based on related information of a third electronic device in the second hop device list, comprises:
determining, by the first electronic device, a number of hops between the second electronic device and the third electronic device based on the related information of the third electronic device in the second hop device list;
determining, by the first electronic device, a number of hops between the first electronic device and the third electronic device based on the number of hops between the second electronic device and the third electronic device; and
updating, by first electronic device, the first hop device list based on the number of hops between the first electronic device and the third electronic device.

18. The method as claimed in claim 17, wherein the updating, by first electronic device, the first hop device list based on the number of hops between the first electronic device and the third electronic device, comprises:
updating, by the first electronic device, the related information of the third electronic device in the first hop device list based on the number of hops between the first electronic device and the third electronic device, in response to the first hop device list comprising the related information of the third electronic device; and/or,
adding, by first electronic device, the related information of the third electronic device into the first hop device list, in response to the first hop device list not comprising the related information of the third electronic device, wherein the related information of the third electronic device is configured to indicate the number of hops between the first electronic device and the third electronic device.

19. The method as claimed in claim 18, wherein the adding, by first electronic device, the related information of the third electronic device into the first hop device list, comprises:
adding, by the first electronic device, the related information of the third electronic device into the first hop device list, in response to the number of hops between the first electronic device and the third electronic device meeting a third condition.

20. The method as claimed in claim 19, wherein the third condition comprises: the number of hops between the first electronic device and the third electronic device being less than or equal to a maximum number of relays.

21. The method as claimed in any one of claims 15-20, wherein after the updating the first hop device list, the method further comprises:
setting or resetting, by the first electronic device, a valid duration of the related information of the second electronic device and/ or a valid duration of the related information of the third electronic device in the first hop device list.

22. The method as claimed in claim 21, further comprising:
deleting, by the first electronic device, the related information of the second electronic device and/ or the related information of the third electronic device from the first hop device list, in response to the valid duration of the related information of the second electronic device expiring and/ or the valid duration of the related information of the third electronic device expiring.

23. The method as claimed in any one of claims 1-22, wherein the relay quantity-related information comprises a number of relay devices in each link of at least one link forwarding a third message, and the third message is configured for a relay discovery process for a second sidelink.

24. The method as claimed in claim 23, wherein the performing, by a first electronic device, a first operation in a relay establishment process for a sidelink based on relay quantity-related information, comprises:
determining, by first electronic device, the second sidelink from the at least one link based on the number of relay devices in each link of the at least one link.

25. The method as claimed in claim 24, wherein the determining, by first electronic device, the second sidelink from the at least one link based on the number of relay devices in each link of the at least one link, comprises:
determining, by first electronic device, the second sidelink from the at least one link based on the number of relay devices in each link of the at least one link and first information;
wherein the first information comprises at least one of: a link quality parameter, buffer capacity of a relay device, a channel busy ratio, and a high-level indication.

26. The method as claimed in claim 25, wherein the high-level indication comprises a relay service code indication.

27. The method as claimed in any one of claims 1-26, further comprising:
initiating, by first electronic device, a relay reselection process for a third sidelink.

28. The method as claimed in claim 27, wherein the first electronic device is a source device of a fourth message or an electronic device close to a source device in a sub-link that triggers reselection in the third sidelink, wherein the fourth message is configured for a relay discovery process for the third sidelink.

29. The method as claimed in claim 27 or 28, wherein the relay reselection process is initiated by the first electronic device in response to at least one of following conditions being met:
at least one sub-link of the third sidelink being disconnected;
link quality of the at least one sub-link being lower than a second threshold; and
a fourth sidelink existing between a source device and a target device of the third sidelink; wherein a number of relay devices in the fourth sidelink is less than that in the third sidelink, or link quality of the fourth sidelink is higher than that of the third sidelink.

30. A first electronic device, comprises:
a relay establishment module, configured to perform a first operation in a relay establishment process for a sidelink based on relay quantity-related information;
wherein the first electronic device is an electronic device in the sidelink.

31. The first electronic device as claimed in claim 30, wherein the relay quantity-related information comprises a maximum number of relays in the sidelink.

32. The first electronic device as claimed in claim 31, the maximum number of relays is pre-configured or configured by at least one of a network device and the first electronic device.

33. The first electronic device as claimed in claim 31 or 32, wherein the maximum number of relays is configured based on at least one of:
relay capability of at least one relay device in the sidelink,
a service type of the sidelink, and
Quality of Service (QoS) of the sidelink.

34. The first electronic device as claimed in any one of claims 30-33, wherein the relay quantity-related information comprises:
first hop counter in a first message, and/or,
a first hop device list in the first electronic device;
wherein the first message is configured for a relay discovery process for a first sidelink, and the first hop counter is configured to indicate a number of electronic devices that have forwarded the first message;
the first hop device list is determined based on a number of hops between the first electronic device and each of at least one device.

35. The first electronic device as claimed in claim 34, wherein the first message is a discovery message or a direct communication request (DCR) message.

36. The first electronic device as claimed in claim 34 or 35, wherein the relay establishment module comprises:
a relay discovery unit, configured to determine whether to forward the first message based on relay quantity-related information, in response to receiving the first message.

37. The first electronic device as claimed in claim 36, wherein the relay discovery unit is configured to forward the first message, in response to the number of hops indicated by the first hop counter being less than a first threshold.

38. The first electronic device as claimed in claim 37, wherein the first threshold is a maximum number of relays in the first sidelink.

39. The first electronic device as claimed in claim 36, wherein the relay discovery unit is configured to:
determine whether a number of hops between the first electronic device and a target device of the first message is less than or equal to a third threshold based on the first hop device list; and
forward the first message, in response to the number of hops between the first electronic device and the target device being less than or equal to the third threshold.

40. The first electronic device as claimed in claim 39, wherein the relay discovery unit is configured to determine that the number of hops between the first electronic device and the target device is less than or equal to the third threshold, in response to the first hop device list comprising related information of the target device.

41. The first electronic device as claimed in claim 39, wherein the relay discovery unit is configured to determine whether the number of hops between the first electronic device and the target device is less than the third threshold based on related information of the target device, in response to the first hop device list comprising the related information of the target device;wherein the related information of the target device is configured to indicate the number of hops between the first electronic device and the target device.

42. The first electronic device as claimed in claim 41, wherein the third threshold is determined based on a maximum number of relays in the first sidelink and/ or the first hop counter in the first message.

43. The first electronic device as claimed in any one of claims 30-42, further comprising::
an information update module, configured to update a first hop device list in the first electronic device, in response to receiving a second message from a second electronic device; wherein the second message is configured to indicate a second hop device list in the second electronic device.

44. The first electronic device as claimed in claim 43, wherein the information update module is configured to update the first hop device list based on related information of the second electronic device and/ or related information of a third electronic device in the second hop device list.

45. The first electronic device as claimed in claim 44, wherein the information update module comprises:
a first quantity determination unit, configured to determine a preset first value as a number of hops between the first electronic device and the second electronic device;
a first update unit, configured to add or update the related information of the second electronic device into the first hop device list based on the number of hops between the first electronic device and the second electronic device, wherein the related information of the second electronic device is configured to indicate the number of hops between the first electronic device and the second electronic device.

46. The first electronic device as claimed in claim 44 or 45, wherein the information update module comprises:
a second quantity determination unit, configured to determine a number of hops between the second electronic device and the third electronic device based on the related information of the third electronic device in the second hop device list, and configured to determine a number of hops between the first electronic device and the third electronic device based on the number of hops between the second electronic device and the third electronic device;
a second update unit, configured to update the first hop device list based on the number of hops between the first electronic device and the third electronic device.

47. The first electronic device as claimed in claim 46, wherein the second update unit is configured to:
update the related information of the third electronic device in the first hop device list based on the number of hops between the first electronic device and the third electronic device, in response to the first hop device list comprising the related information of the third electronic device; and/or,
add the related information of the third electronic device into the first hop device list, in response to the first hop device list not comprising the related information of the third electronic device, wherein the related information of the third electronic device is configured to indicate the number of hops between the first electronic device and the third electronic device.

48. The first electronic device as claimed in claim 47, wherein the second update unit is configured to add the related information of the third electronic device into the first hop device list, in response to the number of hops between the first electronic device and the third electronic device meeting a third condition.

49. The first electronic device as claimed in claim 48, wherein the third condition comprises: the number of hops between the first electronic device and the third electronic device being less than or equal to a maximum number of relays.

50. The first electronic device as claimed in any one of claims 44-49, wherein the information update module further comprises:
a time setting unit, configured to set or reset a valid duration of the related information of the second electronic device and/ or a valid duration of the related information of the third electronic device in the first hop device list.

51. The first electronic device as claimed in claim 50, wherein the time setting unit is further configured to delete the related information of the second electronic device and/ or the related information of the third electronic device from the first hop device list, in response to the valid duration of the related information of the second electronic device and/ or the related information of the third electronic device expiring.

52. The first electronic device as claimed in any one of claims 30-51, wherein the relay quantity-related information comprises a number of relay devices in each link of at least one link forwarding a third message, and the third message is configured for a relay discovery process for a second sidelink.

53. The first electronic device as claimed in claim 52, wherein the relay establishment module comprises:
a relay selection unit, configured to determine the second sidelink from the at least one link based on the number of relay devices in each link of the at least one link.

54. The first electronic device as claimed in claim 53, wherein the relay selection unit is configured to determine the second sidelink from the at least one link based on the number of relay devices in each link of the at least one link and first information;
wherein the first information comprises at least one of: a link quality parameter, buffer capacity of a relay device, a channel busy ratio, and a high-level indication.

55. The first electronic device as claimed in claim 54, wherein the high-level indication comprises a relay service code indication.

56. The first electronic device as claimed in any one of claims 30-55, further comprising:
a relay reselection module, configured to initiate the relay reselection process for the third sidelink.

57. The first electronic device as claimed in claim 56, wherein the first electronic device is a source device of a fourth message or an electronic device close to a source device in a sub-link that triggers reselection in the third sidelink, wherein the fourth message is configured for performing a relay discovery process for the third sidelink.

58. The first electronic device as claimed in claim 56 or 57, wherein the relay reselection module initiates the relay reselection process in response to at least one of following conditions being met:
at least one sub-link of the third sidelink being disconnected;
link quality of the at least one sub-link being lower than a second threshold; and
a fourth sidelink existing between a source device and a target device of the third sidelink; wherein a number of relay devices in the fourth sidelink is less than that in the third sidelink, or link quality of the fourth sidelink is higher than that of the third sidelink.

59. A first electronic device, comprising a processor and a memory, wherein the memory is configured to store a computer program, when called and run by the processor to execute the method according to any one of claims 1 to 29.

60. A chip, comprising:
a processor, configured to call and run a computer program from a memory for causing a device arranged with the chip to execute the method according to any one of claims 1 to 29.

61. A computer-readable storage medium, configured to store a computer program, wherein the computer program is capable of causing a computer to execute the method according to any one of claims 1 to 29.

62. A computer program product, comprising a computer program instruction, wherein the computer program instruction is capable of causing a computer to execute the method according to any one of claims 1 to 29.

63. A computer program, wherein the computer program is capable of causing a computer to perform the method as claimed in any one of claims 1 to 29.
